Europäisches Patentamt

(19) European Patent Office

Office européen des brevets

(11) Publication number: **0 046 034**
**A1**

(12) **EUROPEAN PATENT APPLICATION**

(21) Application number: **81303501.1**

(22) Date of filing: **30.07.81**

(51) Int. Cl.³: **B 23 D 36/00**

(30) Priority: **12.08.80 CA 358034**

(43) Date of publication of application:
**17.02.82 Bulletin 82/7**

(84) Designated Contracting States:
**AT BE CH DE FR GB IT LI SE**

(71) Applicant: **HAWKER SIDDELEY CANADA INC.**
**6855 Airport Road**
**Malton Ontario(CA)**

(72) Inventor: **Bodnar, Ernest R.**
**R.R. No. 1, Kingsworth Road Kingcross Estates**
**King City Ontario(CA)**

(72) Inventor: **Chambers, Robert C.**
**62, Ennisclare Drive West**
**Oakville Ontario(CA)**

(72) Inventor: **Harrison, Robert R.**
**66, Bermfield Path**
**Etobicoke Ontario(CA)**

(74) Representative: **Cook, Anthony John et al,**
**D. YOUNG & CO. 10, Staple Inn**
**London, WC1V 7RD(GB)**

㊺ **Length control apparatus and method.**

㊄ Length-control apparatus and method are disclosed for use in association with a strip processing line (L, N, F) processing strip materials at varying velocities and having strip shear means (F) movable along the axis of the moving strip and operable to close and open on the strip in order to cut the same while in motion. The apparatus has sensing means (M) for sensing the length of strip material and generating length signals, a counter (54) for counting the length signals, and generating a trigger signal, means (18) for sensing the velocity of the strip and providing a signal proportionate to such velocity, means (56) for shaping the velocity signal and delivering a servo control signal, servo means (58, 60) responsive to said servo control signal to deliver pulse signals proportional to such servo control signal, and signal combining means (52) for receiving the length signals and servo signals and combining them, for input to the counter (54), and a method of length control for such strip processing line.

EP 0 046 034 A1

1.

## LENGTH CONTROL APPARATUS AND METHOD

The invention relates to apparatus for cutting sheets of material from a moving strip, in predetermined lengths, and in particular, to a system for controlling the length of cut while the strip is accelerating or decelerating.

### BACKGROUND OF THE INVENTION

In the handling of strip material such as strip sheet metal for example, it is customary to cut off sheets in predetermined lengths from a coil of strip material. In some cases, the strip material is passed from the coil through a leveler, and is then passed as flat strip material through a flying shear or cut-off die. In other cases, the strip material is first of all passed through roller dies to give it a predetermined longitudinal formation. In this case, the strip material is then passed through a flying shear or cut-off die having a profile corresponding to the shape rolled in the strip.

In some simpler systems, where the strip material has not been formed, i.e. it is simply flat, it is permissible to cut the strip by means of a stationary die. In one case the strip material is allowed to form a "hump", while the leading edge of the material is held, and the die is closed.

In other cases, the strip material is allowed to hang in a loop or catenary, between the leveler, and a pair of feed rolls at the entry to the cut-off die. In this way, the strip, while it is in the cut-off die can be held stationary, and the loop is simply allowed to increase in length, while the end of the strip is held, and cut in the die.

In the great majority of cases however it is desirable to cut the sheet metal by means of a flying shear or moving cut-off die carried on rails in a die press. In this case, the sheet metal is passed through the die, and the die is accelerated up to

2.

the speed of the strip. The die press is then cycled to close on the strip and cut it. The die is then stopped and returned to its initial position.

One particularly advantageous form of flying shear is shown in U.S. Letters Patent No. 3 251 490.

In this case, the system consists of a drive member which is connected at will through a clutch to a rack and pinion type drive which propels the die in the die press along the axis of the strip. At some point in the cycle, and after the die has been accelerated to strip speed, the press is cycled closing the die and the strip is cut. The die accelerator clutch is dis-engaged and the forward motion of the die is stopped, and it is returned to its rest position by means of an air cylinder, ready for another cycle.

The cut cycle is initiated from an electronic measuring system having a counter, and a pulse generator driven by the strip. A pre-set length is set in the counter and the counter provides a cut signal every time this pre-set amount of strip has passed and induced a pre-set count of pulses from the pulse generator. At the moment the cut signal is made, the shear or die should close and cut the strip. However, since the die is initially at rest and the strip is in motion a certain time is required to put the die in motion and accelerate it to strip speed. During this time delay, the point on the strip that should have been cut has gone past the die. If the cut is made the sheet that is cut off will be too long.

Accordingly the counter is programmed to provide the cut signal after a pre-set pulse count which is less than the desired length of the sheet. This difference can be determined accurately for steady speed conditions. All sheets made during steady run conditions will be within a plus/minus tolerance consistent with the repeatability accuracy of all devices such as solenoid valves, clutches, etcetera, in the system and all plus errors must have their corresponding minus errors. If they do not, the measuring system is not tracking the strip properly.

However, during varying speed conditions, i.e. when the line is started or stopped, the strip will accelerate or decelerate. In this case the time delay required for acceleration of the die to strip speed will vary. If the counter is not adjusted the sheets cut during acceleration will be too long, and those cut under deceleration will be too short.

Any errors in length, in excess of permitted tolerances, cause problems both for the manufacturer and customer.

The cut sheets are stacked in a stacker at the end of the process line. Sheets which are too long will not fit in the stacker and will jam.

For the end user any such errors make the sheet difficult to place in position, and cause problems.

It is difficult for the manufacturer to remove sheets which are outside the tolerances. Even if he does, such sheets represent a substantial wastage cost.

The length error, at any given speed, due to the time delay required for die acceleration, occurs in two different time periods, and may be calculated as follows.
1. There is a constant time delay $t_1$ between initiation of the cut signal and the die accelerator starting to move. This is the time required to open a valve and engage the clutch sufficiently to move the die. It is a constant time for any machine but can be different for different machines. It is constant regardless of strip speed.  The length error $E_1$ due to this constant delay can be expressed as follows:

Error $E_1 = Vt_1$ where V is strip velocity
in inches per second and $t_1$ is time
delay in seconds.

2.          There is a variable time delay $t_2$ between the time the die starts to move and when it matches strip speed.  This second time delay varies depending on strip speed, and results in a second length error $E_2$.

The amount of strip which passes under the die is $\frac{Vt_2}{2}$.

Strip speed is assumed constant and the die is accelerating linearly.  Since $t_2$ is the time taken to accelerate the die, it can be expressed $t_2 = \frac{V}{a}$ where 'a' is the rate of acceleration of the die in inches per second.

Therefore, substituting $t_2$ in $\frac{Vt_2}{2}$, the second error $E_2 = \frac{V^2}{2a}$

Total error $= E_1 + E_2 = Vt_1 + \frac{V^2}{2a}$

CALCULATION OF " a "

Kinetic Energy put into die $= \frac{1}{2} MV^2 = \frac{WV^2}{2a}$ inch. lb.

When V = in/sec. and g = in/sec.$^2$ and W = lbs.

This energy is put in through a clutch which has torque T inch. lb. and a pinion with radius ' r ' running on a rack.  The thrust on the rack is $F = \frac{T}{r}$ lbs.

Work done = $\frac{T}{r}$ x d where d is distance travelled during acceleration of the die.

Therefore, $\frac{Td}{r} = \frac{Wv^2}{2g}$ and $d = \frac{Wv^2}{2gT}$

We also know that the distance travelled during a linear acceleration period is $d = \frac{v^2}{2a}$

Therefore $\frac{v^2}{2a} = \frac{Wv^2 r}{2gt}$

$a = \frac{gT}{Wr} = \frac{386T}{Wr}$ (T - inch. lb., W = lbs. r = inches and

$g = 386$ inches/sec.$^2$)

All the above are known parameters for a given machine.

At any given speed it is thus possible to adjust the total pulse count in the counter so as to allow for the error, and correct it.

For a particular machine it is possible to select a range of different strip speeds, and a speed v:s error curve can be plotted before the equipment is built. Due to a variety of factors it is found that this curve is not linear, but is curved in a manner characteristic of the particular machine. The calculated curve must be checked in practice for each machine, and a more accurate curve must be developed by means of equipment testing when it is installed in operating status. Once the line speed v:s error curve is known, a system can be provided that will monitor strip speed, and make corrections to the measuring system pulse train for each cut as a function of strip speed, in accordance with the invention.

For the purposes of these calculations, length errors due to changes in velocity during time delays $t_1$ and $t_2$ have been ignored. However, such changes do in fact contribute minor errors which are an additional problem.

Accordingly it is clearly desirable to provide a system which reduces, as far as possible, such length errors, during changes in line speed.

BRIEF SUMMARY OF THE INVENTION

With a view to providing the foregoing functions and advantages, the invention provides a length-control apparatus for use in association with a strip processing line, processing strip material at varying velocities and having strip shear means, which is moveable along the axis of the moving strip, and is moveable to close and open on the strip, in order to cut the same, while in motion, such control apparatus, having means for sensing the length of strip material passing a predetermined point, and generating a length signal therefrom, counter means for counting said length signal, and being operative to generate a trigger signal responsive to a predetermined count representing a predetermined length of such strip material, sensing means connected with said strip material for sensing the velocity thereof, and for providing a signal responsive to such velocity, signal shaping means, for shaping said velocity signal and delivering a servo control signal therefrom, servo motor means operable in two directions, responsive to said servo control signal, pulse generator means operably connected with said servo means, whereby to deliver pulse signals proportional to such servo control signal, and, signal combining means, for receiving said length signal, and said servo pulse signal, and combining the two, for input to said counter.

It is a further and related objective of the invention to provide a control apparatus having the foregoing features and advantages, which further incorporates speed control signal generating means, responsive to a predetermined count in said counter, to deliver a speed control signal, and means responsive to said speed control signal to discontinue acceleration or deceleration of the strip, and maintain the velocity of said strip steady during acceleration and operation of said shear means

It is a further and related objective of the invention to provide such a control apparatus wherein it is possible for a machine operator to adjust the velocity of the strip upwardly or downwardly, and wherein the control apparatus will automatically compensate during such speed adjustment, for cut-to-length errors resulting from such adjustment.

It is a further objective of the invention to provide control apparatus having the foregoing features and advantages wherein the signal shaper produces a signal, which corresponds substantially to the shape of the predetermined error v.s.

velocity curve for the particular machine.

It is a further and related objective of the invention to provide a control apparatus having the foregoing advantages wherein the servo driven pulse generator is operative to produce negative pulses during acceleration, and positive pulses during deceleration, such pulses, upon combination with the length signal, producing a corrected length signal for the aforesaid counter.

The various features of novelty which characterize the invention are pointed out with particularity in the claims annexed to and forming a part of this disclosure. For a better understanding of the invention, its operating advantages and specific objects attained by its use, reference should be had to the accompanying drawings and descriptive matter in which there are illustrated and described preferred embodiments of the invention.

IN THE DRAWINGS.

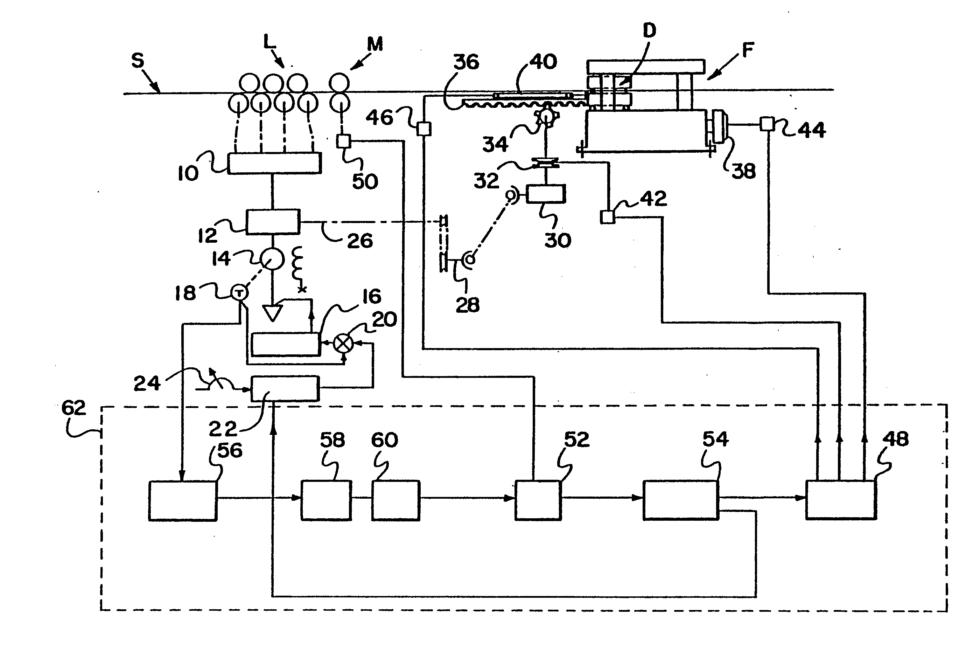

Figure 1 is a schematic illustration showing a cut-to-length control system in accordance with the invention.

DESCRIPTION OF A SPECIFIC EMBODIMENT.

Referring now to the illustration, it will be seen that a piece of strip material indicated by the reference S is shown, together with a portion of a strip sheet processing line. The processing line is represented in this particular example by the leveler rolls L, measuring rolls N, and flying shear F.

The flying shear F may be of the type shown in the aforesaid U.S. Letters Patent 3,253,490, and incorporates a cut-off die D moveable along the axis of strip S.

It will of course be appreciated that these components of the processing line are merely representative, for the

9.

purposes of explanation only.   Such processing lines may incorporate a wide variety of different stations, for example, for forming shapes, and performing a variety of different functions on the strip.   The rollers at all, or only some of such stations will be power driven, through a suitable prime mover, so as to move the strip material S at predetermined velocity or "line speed".

In a typical case, for example the processing of strip sheet metal, such a line speed might be 240 feet per minute.

In order to cut-off the strip material the die D, incorporated in the shear F, must be moved from an "at rest" position, along the axis of the strip S, and accelerated up to the speed of the strip. At that point, the shear is then operated to close the die on the strip thereby cutting it.   The die is then opened again and stopped and moved in the reverse direction, ready for the next cut.   All of these functions are described in the aforesaid U.S. Letters Patent.

In the case of the processing line illustrated, the drive for the strip S is achieved through the leveler rolls L.   These are driven through a gear box 10, which is in turn driven through a drive divider 12, my means of an electric motor 14.   The electric motor 14 is controllable, through speed regulater 16 to provide the desired velocity for the strip.

A tachometer 18 is coupled to the drive shaft of the drive motor 14, and senses the speed thereof, and thus provides an analogue signal of the velocity of the strip S.   The tachometer is connected through an input summary point 20, to the speed regulator 16, and provides a feed-back signal for maintaining such speed constant.

10.

In order to accelerate the motor 14, a ramp generator 22 is connected through input summing point 20 to speed regulator 16. Generator 22 is in turn operated by means of a manual line speed control 24, which will normally be located at a suitable remote control panel (not shown).

The drive divider gear box 12 also provides, through a drive shaft 26, and universal coupling 28, the drive input for a gear box 30, to supply power to the flying shear F. Gear box 30 in turn drives clutch 32, which is then coupled to drive pinion 34, driving rack 36. The rack 36 is in turn connected with the die D, to produce linear movement thereof along the axis of the strip S.

Closing and opening of the die D is achieved by means of a separate drive motor crankshaft and clutch indicated collectively as 38.

The braking, and return movement of die D are achieved by means of an air cylinder 40.

It will of course be appreciated that the particular features of the flying shear F and die D as described are merely illustrative, and the invention would be applicable to other forms of flying shear or cut-off die, operated and controlled in other ways, as will become apparent below.

The clutch 32 is controlled by means of a clutch solenoid 42, and clutch 38 is controlled by means of a solenoid 44, and air cylinder 40 is controlled by means of a solenoid 46. All of these solenoids are in turn operated by means of trigger signal generator 48.

The length of the strip S moving along the line, is continuously being monitored by means of measuring rolls M. Measuring rolls M are connected to an encoder 50 which in this case is in the form of a bi-directional pulse generator, which is capable of measuring both forward and reverse movement of the strip S. Pulses from the encoder 50 are then delivered to a pulse mixer 52, the output of which is then

11.

supplied as the input to counter 54.  As will be seen, counter 54 is connected to the trigger signal generator 48, and upon a predetermined count being measured in counter 54, an operating signal will be delivered to trigger signal generator 48 which then, in turn, delivers the appropriate signals to the various solenoid valves as described above.

The above features will operate satisfactorily to produce acceptable lengths of cut strip when the strip is being processed at a steady velocity and within the design limits of the process equipment.

However, if strip velocity changes are made such as during starting and stopping of the process or from one steady state to another, the length of the cut pieces will vary because of the varying time required to accelerate the die D to strip velocity.  Such length errors occur only if strip velocity is changed between cut cycles.

In order to accomodate such variations, the tachometer 18 is also arranged to supply an analogue speed signal, proportional to the speed of the strip S.  This analogue signal is then supplied to the signal shaper 56.  The analogue signal from tachometer 18 is linear i.e. varying proportionately with the speed of the strip S.  However, as noted above, the time required for the acceleration of the die D to line speed does not vary in a linear manner relative to strip velocity, but in accordance with a characteristic error curve, as described above.  Pulse shaper 56 thus shapes the analogue signal from tachometer 18 in accordance with the predetermined error curve for the particular machine.  The modified error signal from pulse shaper 56 is then supplied as the input to a servo drive motor 58.  Drive servo motor 58 is coupled to an error signal generator 60, which generates error signal pulses which will be positive pulses where the strip is decelerating.  Such error signal pulses are then supplied to the pulse mixer 52, and combined with the length pulse signals from encoder 50.

12.

The combined output from mixer 52 is supplied to counter 54.

It will thus be seen that during acceleration of the strip, the length signal count from encoder 50 will be increased by the positive error signal count from generator 60, and the counter 54 will thus reach its pre-set length count and so produce an operating signal somewhat earlier, thus correcting the length of cut.

Where the strip S is decelerating, the count of pulses from encoder 50 will be reduced by the negative error signal count from generator 60 and counter 54 will thus reach its preset length count somewhat later.

It should be understood that even when these corrections have been made in the train of pulses going to counter 54, there would still be minor length errors introduced due to continued acceleration or deceleration of the strip S after the initiation of the operating signal from counter 54 and during the acceleration of die D to strip velocity.

In order to eliminate even these minor errors, the counter 54 is connected to ramp generator 22, and at a predetermined remainder in the pre-set length count, it provides a "hold" signal to ramp generator 22. Ramp generator 22 and regulator 16 normally force the main drive 14 of leveller L to accelerate and decelerate in a controlled linear manner but, upon receipt of such a "hold" signal, it will momentarily hold or maintain the velocity of the strip unchanged, long enough to permit the cut to take place. It will then automatically resume either acceleration or deceleration, until the required steady strip speed has been established or the next hold signal is received from the counter 54. During steady state operations when strip velocity is unchanged, the "hold" signals will continue in each cut cycle. However, since ramp generator 22 is not changing the strip velocity, such signals will have no result.

For the sake of convenience the circuit components 48, 52, 54, 56, 58 and 60 are all located in a control module indicated generally as 62.

It will thus be seen that by means of the invention, errors due to acceleration and deceleration of the strip are substantially eliminated.

Having described what is believed to be the best mode by which the invention may be performed, it will be seen that the invention may be particularly defined as follows:

Length control apparatus for use in association with a strip processing line processing strip material at varying velocities and having strip shear means movable along the axis of the moving strip and operable to close and open

14.

on the strip in order to cut the same while in motion and having means for sensing the length of strip material and generating length signals, counter means for counting the length signals and generating a trigger signal, means for sensing the velocity of the strip, and providing a signal proportionate to such velocity, means for shaping the velocity signal and delivering a servo control signal, servo means responsive to said servo control signal to deliver pulse signals proportional to such servo control signal, and, signal combining means for receiving the length signals and servo signals, and combining them, for input to the counter.

The invention further comprises a method of controlling the cut length of a strip processing line processing strip material at varying velocities and having strip shear means movable along the axis of the moving strip, and operable to close and open on the strip in order to cut the same while in motion, to predetermined lengths, said strip processing line having means for sensing the length of strip material generating length signals, and counter means for counting the length signals and generating a trigger signal for the operation of such strip shear means at a predetermined signal count, and comprising the steps of sensing the velocity of the moving strip, generating an analogue signal proportionate thereto, shaping said signal, generating a servo signal responsive to said shaped velocity signal, and combining said servo signal and said length signals to provide a combined counter signal, and inputting said counter signal to said counter means.

The foregoing is a description of a preferred embodiment of the invention which is given here by way of example only. The invention is not to be taken as limited to any of the specific features as described, but comprehends all such variations thereof as come within the scope of the appended claims.

WHAT IS CLAIMED IS:

1.      Length-control apparatus for use in association with a strip processing line, processing strip material at varying velocities and having strip shear means moveable along the axis of the moving strip, and    operable to close and open on the strip, in order to cut the same while in motion, said length-control apparatus, comprising;

        means for sensing the length of strip material passing a predetermined point, and generating length signals therefrom;

        counter means for counting said length signals, and being operative to generate a trigger signal responsive to a predetermined count representing a predetermined length of such strip material;

        sensing means operatively connected for sensing the velocity of said strip material, and providing a signal proportionate to such velocity;

        velocity signal shaping means for shaping said velocity signal and delivering a servo control signal therefrom;

        servo motor means operable in two directions, responsive to said servo control signal;

        pulse generator means operably connected with said servo motor means, whereby to deliver pulse signals proportional to such servo control signal, and,

        signal combining means, for receiving said length signals, and said servo pulse signals, and combining the same, for input to said counter.

2.      Length control apparatus as claimed in Claim 1 wherein said velocity control signal generating means is responsive to a predetermined count in said counter, to deliver a strip velocity control signal, and means responsive to said velocity control signal to discontinue acceleration or deceleration of the strip, and maintain the velocity of said strip steady during acceleration and operation of said shear means.

3. Length-control apparatus as claimed in Claim 2 including main drive means for driving said strip processing line, and, speed control means governing said main drive means, for controlling the speed thereof, and being operable to procure acceleration and deceleration thereof, said speed control means being responsive to the velocity control signal aforesaid.

4. Length-control apparatus as claimed in Claim 3 wherein said speed control means comprises a ramp generator for procuring linear acceleration and deceleration of said main drive means.

5. Length-control apparatus as claimed in Claim 4 wherein said velocity sensing means comprises a tachometer connected to sense the velocity of said strip processing line, and operable to delivery an analogue signal responsive to said velocity.

6. Length-control apparatus for use in association with a strip processing line processing strip material at varying velocities and having strip shear means movable along the axis of the moving strip and operable to close and open on the strip in order to cut the same while in motion and having sensing means for sensing the length of strip material and generating length signals, and counter means for counting the length signals and generating a trigger signal and comprising;

means for sensing the velocity of the strip, and providing a signal proportionate to such velocity;

means for shaping the velocity signal and delivering a servo control signal;

servo means responsive to said servo control signal to deliver pulse signals proportional to such servo control signal, and,

signal combining means for receiving the length signals and servo signals and combining them, for input to the counter.

7.      Method of controlling the cut length of a strip processing line processing strip material at varying velocities and having strip shear means movable along the axis of the moving strip, and operable to close and open on the strip in order to cut the same while in motion, to predetermined lengths, said strip processing line having means for sensing the length of strip material generating length signals, and counter means for counting the length signals and generating a trigger signal for the operation of such strip shear means at a predetermined signal count, and comprising the steps of;

sensing the velocity of the moving strip;

generating an analogue signal proportionate thereto;

shaping said signal;

generating a servo signal responsive to said shaped velocity signal;

combining said servo signal and said length signals to provide a combined counter signal, and inputting said counter signal to said counter means.

8.      The method as claimed in Claim 7 wherein said length signals comprise a series of pulses, and wherein said servo signal comprises a series of pulses, and including the step of adding said servo signal pulses to said length signal pulses when said strip is accelerating, whereby to provide said trigger signal from said counter before the full count of said length signals have been generated by said length sensing means.

9.      The method  as claimed in Claim 7 wherein said length signals comprise a series of pulses, and wherein said servo signal comprises a series of pulses, and including the step of subtracting said servo signal pulses from said length signal pulses when said strip is decelerating, whereby to provide said trigger signal from said length counter later than the full count of said length signals generated by said length sensing means.

10.     The method as claimed in Claim 7 including the step of generating a hold signal, just prior to said trigger signal,  and communicating said hold signal to said strip processing line, whereby to hold the velocity thereof constant during movement of said shear means along the axis of said moving strip, whereby to prevent length errors caused by changes in said strips velocity during such acceleration of said shear means.

0046034

## European Patent Office

**EUROPEAN SEARCH REPORT**

Application number

EP 81 30 3501

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 1 373 705 (LE MATERIEL ELECTRIQUES) <br> * The whole document * <br><br> -- | 1,7 | B 23 D 36/00 |
| | US - A - 3 811 354 (KAWASAKI JUKOGYO K.K.) <br> * The whole document * <br><br> -- | 1,7 | |
| A | EP - A - 0 001 565 (SIEMENS A.G.) | | **TECHNICAL FIELDS SEARCHED (Int. Cl.³)** |
| A | DE - A - 1 463 590 (SIEMENS A.G.) | | B 23 D |
| A | DE - A - 2 341 956 (SCHULER GmbH) | | B 26 D |
| A | FR - A - 2 261 092 (KHABKOVSKY AVIATSIONNY INSTITUT) | | |
| A | US - A - 3 641 856 (LEVY) | | |
| A | FR - A - 2 084 688 (GENERAL ELECTRIC) <br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-11-1981 | BERGHMANS |

EPO Form 1503.1 06.78